# EUROPEAN PATENT APPLICATION

(11) **EP 4 628 839 A1**
(43) Date of publication of application: **08.10.2025**
(21) Application number: 24909241.2
(22) Date of filing: 07.11.2024
(51) Int. Cl.: G01B 11/08, G01B 11/03, G01B 11/02, G06T 7/00

(54) **HOLE INSPECTION SYSTEM AND METHOD**

(30) Priority: 28.12.2023 KR 20230195778
(71) Applicant: Yas Co., Ltd., Paju-si, Gyeonggi-do 10857 (KR)
(72) Inventor: KIM, Hyung Su, Paju-si, Gyeonggi-do 10857 (KR); KIM, Hyo Jun, Paju-si, Gyeonggi-do 10857 (KR)
(74) Representative: Isarpatent
(86) International application number: PCT/KR2024/017479
(87) International publication number: WO 2025/143522

(57) **Abstract**

The present invention relates to a hole inspecting system and method for inspecting a shape and a position of a via hole formed in a substrate. According to an embodiment, the hole inspecting system includes a substrate support device that supports the substrate, a camera disposed above or below the substrate to acquire an image of the substrate, a light source disposed at the same side as the camera based on the substrate, a reflective plate disposed at a side opposite to the camera, and an inspection module that inspects the via hole based on the image acquired by the camera. The image of the substrate is generated based on light reflected by the reflective plate while passing through an inner diameter of the via hole, light reflected from an outer area of an outer diameter, and light reflected or scattered from an area between the outer and inner diameters.

## Description

### [Technical Field]

The present invention relates to a hole inspecting system and method, and more particularly, to a system and method for inspecting a shape and a position of a via hole formed in a substrate.

### [Background Art]

Recently, to improve the degree of integration of a device, next-generation processing-in-memory (PIM) semiconductors are being developed, and for this purpose, a glass substrate with a large is being used. To this end, a system and method for inspecting a via hole formed in a substrate is required.

In this regard, according to Japanese Patent Registration No. 3859446 titled "Semiconductor substrate inspecting device and semiconductor substrate inspecting method," a technology for inspecting a via hole by sequentially applying a plurality of DC voltages having different voltage values to a semiconductor substrate is disclosed.

This existing technology is a technique capable of being applied after a conductor is processed in the via hole and thus has a limitation in that this technology is insufficient for inspecting the via hole itself such as a shape and a position of the via hole.

Meanwhile, the above-described background technology constitutes technical information that an inventor possesses to derive the present invention or acquires during a process of deriving the present invention and is not necessarily a widely-known technology disclosed to the general public prior to the filing of the application of the present invention.

### [Description of Invention]

### [Technical Problem]

A problem to be solved by the present invention is to shorten an inspection time and improve accuracy in inspecting a via hole formed in a substrate.

A problem to be achieved by the present invention is to accurately and quickly perform an inspection related to inspecting at least one of an inner diameter, an outer diameter, and a position of a via hole formed in a substrate.

A problem to be solved by the present invention is to establish a low-cost and high-efficiency system for inspecting a via hole formed in a substrate.

The aspects of the present invention are not limited to the aspects described above, and those skilled in the art will clearly understand other aspects not described from the following description.

### [Technical Solution]

According to an embodiment of the present invention to solve the above-described problems, a hole inspecting system for a substrate provided with a via hole includes a substrate support device that supports the substrate, a camera disposed above or below the substrate to acquire an image of the substrate, a light source disposed at the same side as the camera based on the substrate, a reflective plate disposed at a side opposite to the camera, and an inspection module that inspects the via hole based on the image of the substrate acquired by the camera, wherein the image of the substrate is generated based on light reflected by the reflective plate while passing through an inner diameter of the via hole, light reflected from an outer area of an outer diameter of the via hole, and light reflected or scattered from an area between the outer diameter of the via hole and the inner diameter of the via hole.

Further, according to the embodiment of the present invention, in the hole inspecting system, the reflective plate may have an area corresponding to an entire area of the substrate.

Further, according to the embodiment of the present invention, in the hole inspecting system, the reflective plate may have a width corresponding to a width of the substrate and a length corresponding to a field of view (FOV) of the camera.

Further, according to the embodiment of the present invention, in the hole inspecting system, the reflective plate may be spaced apart from the substrate by a distance of 0.5 mm to 170 mm.

Further, according to the embodiment of the present invention, in the hole inspecting system, the reflective plate may have reflectance of 60% or more.

Further, according to the embodiment of the present invention, in the hole inspecting system, the reflective plate may be formed by being plated with aluminum or chromium.

Further, according to the embodiment of the present invention, in the hole inspecting system, the light source may be a coaxial light source for the camera and emit straight light.

Further, according to the embodiment of the present invention, in the hole inspecting system, the camera may acquire the image of the substrate including both the inner diameter and the outer diameter of the via hole, and the inspection module may determine whether the via hole is good based on the image of the substrate.

Further, according to the embodiment of the present invention, in the hole inspecting system, in the image of the substrate, a difference between gray levels inside and outside a boundary area of the inner diameter may be 10 or more.

Further, according to an embodiment of the present invention, a hole inspecting method, which is performed by the hole inspecting system, includes radiating light onto a substrate by a light source that is disposed at the same side as a camera and a reflective plate that reflects light emitted from the light source, acquiring an image of the substrate using the camera, wherein the image of the substrate is generated based on light reflected by the reflective plate while passing through an inner diameter of a via hole, light reflected from an outer area of an outer diameter of the via hole, and light reflected or scattered from an area between the outer diameter of the via hole and the inner diameter of the via hole, and inspecting the via hole based on the acquired image of the substrate.

### [Advantageous Effects]

According to any one solution for problems of the present invention, in inspecting a via hole formed in a substrate, an inspection time can be shortened, and accuracy can be improved.

According to any one solution for problems of the present invention, in inspecting at least one of an inner diameter, an outer diameter, and a position of a via hole formed in a substrate, the inspection can be accurately and quickly performed.

According to any one solution for problems of the present invention, in inspecting a via hole formed in a substrate, a low-cost and high-efficiency system can be established.

The effects obtained in the present invention are not limited to the effects described above, and other effects not described will be clearly understood by those skilled in the art to which the present invention pertains from the above detailed description.

### [Description of Drawings]

FIG. 1 is a cross-sectional view illustrating an example of a via hole.
FIG. 2 is an exemplary view of an image of a substrate according to an embodiment of the present invention.
FIG. 3 is a side view for describing a hole inspecting system according to an embodiment of the present invention.
FIG. 4 is an exemplary view of a substrate having a plurality of via holes according to an embodiment of the present invention.
FIG. 5 is a top view for describing the hole inspecting system according to the embodiment of the present invention.
FIG. 6 is an exemplary view for describing a hole inspecting system according to another embodiment.
FIG. 7 is a flowchart for describing a hole inspecting method according to the embodiment of the present invention.
FIG. 8 is an image of one via hole in an image of the substrate according to the embodiment of the present invention.
FIG. 9 is graphs illustrating a degree of change in a gray level of a via hole on the image of the substrate of FIG. 8 according to a separation distance between the substrate and a reflective plate and a type of the reflective plate.

### [Best Mode]

Advantages and features of the present invention and a method of achieving the advantages and the features will become apparent with reference to embodiments described below in detail together with the accompanying drawings. However, the present invention is not limited to embodiments disclosed below but will be implemented in various different forms. The present embodiments are provided merely to fully inform the scope of the present invention to those skilled in the art to which the present invention pertains by ensuring that the disclosure of the present invention is complete. That is, the present invention is merely defined by the scope of the appended claims.

A shape, a size, a ratio, an angle, a number, and the like disclosed in the drawings to describe the embodiments of the present invention are exemplary, and thus the present invention is not limited to the illustrations. Further, in the description of the present invention, when it is determined that a detailed description of widely-known related technologies may make the subject matter of the present invention unnecessarily unclear, the detailed description will be omitted. When the wording "include," "have," or "consist of" mentioned in the specification is used, other parts may be added unless "only" is used. A component expressed in a singular form includes a plurality of components unless specifically stated.

The component is interpreted to include a margin of error even when there is no explicit description.

Although terms such as first and second are used to describe various components, these components are not limited by these terms. These terms are only used to distinguish one component from another component. Thus, a first component mentioned below may be a second component within the technical spirit of the present invention.

The same reference numerals refer to the same components throughout the specification unless otherwise stated.

Features of the various embodiments of the present invention may be partially or entirely coupled and combined to each other, technically various interlocking and driving that may be fully understood by those skilled in the art are made possible, and the embodiments may be implemented independently of each other or may be implemented together in a correlated relationship.

Hereinafter, the present invention will be described in detail with reference to the accompanying drawings.

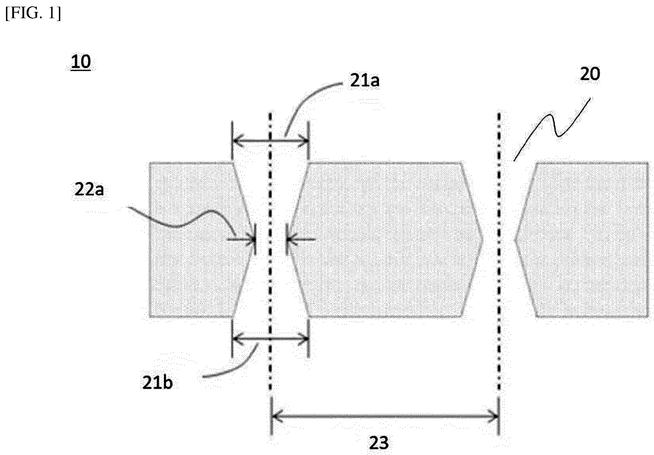

First, FIG. 1 is a cross-sectional view illustrating an example of a via hole 20 formed in a substrate 10. Referring to FIG. 1, a cross section of the via hole 20 according to the embodiment may include an upper diameter 21a and a lower diameter 21b and include a waist diameter 22a. Further, via holes 20 may be spaced a certain distance from each other, and in this case, a distance 23 between the via holes 20 may be defined as a distance between centers of the via holes 20.

According to FIG. 1, a cross-section of the via hole 20 formed in the substrate 10 may be formed in an hourglass shape having both wide ends and a narrow center but may be implemented in various forms such as a tapered shape or a circular column shape according to the embodiment.

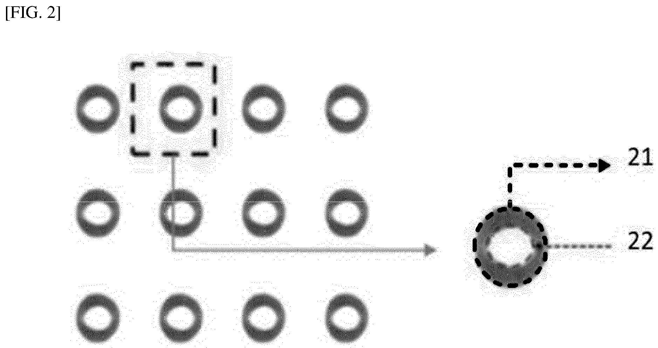

Further, FIG. 2 is an exemplary view of an image of the substrate 10 according to the embodiment of the present invention. Referring to FIG. 2, the image of the substrate 10 observed from an upper side or a lower side of the substrate 10 includes an image of the via hole 20. According to FIG. 2, the via hole 20 may be implemented in a circular shape but may be implemented in various shapes such as an elliptic shape and a quadrangular shape according to the embodiment.

Referring to FIGS. 1 and 2, the upper diameter 21a and the lower diameter 21b of the via hole 20 correspond to a vertical outer diameter 21 of the via hole 20. Further, the waist diameter 22a of the via hole 20 corresponds to an inner diameter 22 of the via hole 20. In this case, based on the via hole 20, the substrate 10 may be divided into an outer area of the outer diameter 21, a tapered area between the outer diameter 21 and the inner diameter 22, and a cavity area inside the inner diameter 22. In this case, since reflectance of radiated light is changed due to influences of morphological characteristics of the areas, a system for identifying and inspecting the inner diameter 22 and the outer diameter 21 of the via hole 20 is disclosed.

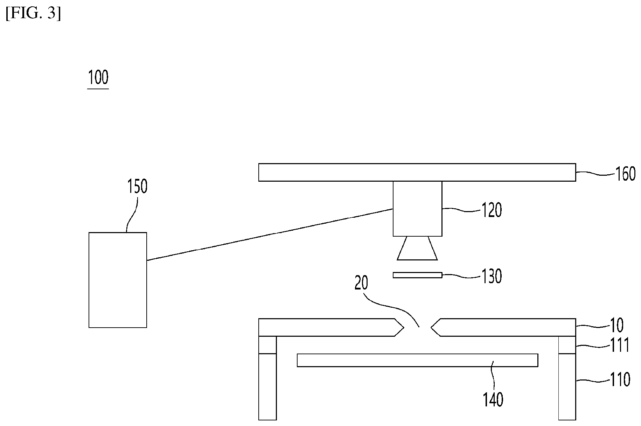

In this regard, FIG. 3 is an exemplary side view for describing a hole inspecting system 100 according to an embodiment of the present invention. Referring to FIG. 3, the hole inspecting system 100 is for inspecting the via hole 20 formed in the substrate 10, and for example, may inspect the plurality of via holes 20 formed in the large-area glass substrate 10 for a processing-in-memory (PIM) semiconductor.

According to an embodiment, the hole inspecting system 100 may include a substrate support device 110 that supports the substrate 10, a camera 120 disposed above or below the substrate 10 to acquire an image of the substrate 10, a light source 130 that radiates light onto the substrate 10, a reflective plate 140 that reflects light emitted from the light source 130, and an inspection module 150 that inspects the hole 20 based on the image acquired by the camera 120.

In this case, the substrate support device 110 is configured to support the substrate 10 while in contact with the substrate 10 during a process of inspecting the via hole 20, may support both sides of the substrate 10 according to the embodiment, and for example, may support an edge area of the substrate 10 in which the via hole 20 is not disposed.

According to the embodiment, the substrate support device 110 may include a substrate moving module 111, and the substrate moving module 111 may move the substrate 10 according to a process. Details of the movement of the substrate 10 will be described below in a related section.

Next, the camera 120 is disposed above or below the substrate 10 to acquire the image of the substrate 10, and referring to FIG. 3, an example in which the camera 120 is disposed above the substrate 10 is illustrated.

In this regard, the camera 120 may be provided as a line scan camera, such as a tdi line scan camera, and accordingly, the image of the substrate 10 may be quickly scanned and acquired. In this regard, the camera 120 may be moved by a camera moving module 160 to acquire an image of the entire area of the substrate 10. To this end, the camera moving module 160 may support the camera 120 while the camera 120 is spaced a predetermined distance from the substrate 10 and may move the camera 120 according to progress of the process.

In this case, the camera 120 should acquire the image of the substrate 10 including the image of the via hole 20 sufficiently to inspect a shape, a position, or the like of the via hole 20. In detail, the image of the substrate 10 in which a difference between gray levels inside and outside a boundary area between the inner diameter 22 and the outer diameter 21 is 10 or more should be acquired to identify and inspect the outer diameter 21 and the inner diameter 22 of the via hole 20. Here, the gray level refers to a value obtained by dividing luminance of each pixel on the image into 256 gray scales from 0 to 255 when the image of the substrate acquired through the camera 120 is digitized.

That is, the hole inspecting system 100 may inspect the inner diameter 22 by acquiring the image of the substrate 10 in which a difference between the gray levels inside and outside a boundary area of the inner diameter 22 is 10 or more and may inspect the outer diameter 21 by acquiring the image of the substrate 10 in which the difference between the gray levels inside and outside a boundary area of the outer diameter 21 is 10 or more.

Thus, the hole inspecting system 100 may adjust a brightness of the light source 130, a type of reflective plate 140 that affects reflectance, and a gap between the reflective plate 140 and the substrate 10 to acquire an image in which the difference between the gray levels inside and outside the boundary area of the inner diameter 22 is 10 or more.

That is, the hole inspecting system 100 may include the light source 130 and the reflective plate 140 in consideration of this condition. In this case, the light source 130 is configured to radiate light onto the substrate 10, may be disposed at the same side as the camera 120 based on the substrate 10, and may be disposed above or below the substrate 10 according to a position of the camera 120. According to the embodiment, the light source 130 may be implemented as a coaxial light source with respect to the camera 120 and may provide light having robust straightness.

Further, the reflective plate 140 may reflect light emitted by the light source 130 and may be disposed at a side opposite to the camera 120 based on the substrate 10.

For example, when the camera 120 is disposed above the substrate 10 as illustrated in FIG. 3, the light source 130 may be disposed above the substrate 10 to provide coaxial light for the camera 120 to the substrate 10, and the reflective plate 140 may be disposed below the substrate 10 at a side opposite to the camera 120 based on the substrate 10 to reflect the light emitted by the light source 130 toward the substrate 10.

The reflective plate 140 according to the embodiment may reflect the light of the light source 130 toward the substrate such that a difference between the gray levels inside and outside the inner diameter of the hole in the image of the substrate acquired through the camera 120 is 10 or more.

To this end, the reflective plate 140 has a predetermined reflectance capable of reflecting sufficient light so that a difference between the gray levels inside and outside the inner diameter of the via hole 20 in the image of the substrate is more than 10. For example, the predetermined reflectance may be 60% or more. Here, the reflectance may refer to a ratio of the amount of reflected light to the amount of incident light, may correspond to one or more of visible light, infrared light (IR), and ultraviolet light (UV) according to a wavelength to which the camera 120 may correspond, and for example, may be a ratio of the amount of reflected light to the amount of incident light for the visible light. Further, according to the embodiment, the light source 130 provides a coaxial light source for the camera to the substrate 10, and thus in the embodiment of the present invention, a ratio of the amount of reflected light to the amount of vertically incident light may be assumed to be reflectance.

According to the embodiment, in order to achieve a predetermined reflectance, the reflective plate 140 may be formed of one of glass, ceramic, quartz, acrylic, polypropylene, polyimide, and PET having light transmittance and light reflectance or may be formed of a metal surface having light blocking properties and light reflectance. For example, the reflective plate may include, as a material of the reflective plate or as a coating material, one or more of silicon (Si), chromium (Cr), aluminum (Al), gold (Au), silver (Ag), titanium (Ti), zirconium (Zr), tungsten (W), molybdenum (Mo), platinum (Pt), copper (Cu), and zinc (Zn) and may be preferably formed by being plated with either chromium or aluminum. When the reflective plate 140 is formed by being plated with chromium at a thickness of 1000 Å (angstrom), the reflective plate 140 may have reflectance of about 60%, and when the reflective plate 140 is formed by being plated with aluminum, the reflective plate 140 may have reflectance of about 90%.

In addition, the reflective plate 140 may be spaced a predetermined distance from the substrate 10 so that the reflected light is sufficiently collected in the camera 120, and thus a difference between the gray levels inside and outside the inner diameter 22 of the via hole 20 in the image of the substrate 10 is 10 or more. For example, the reflective plates 140 may be spaced apart from each other by a distance of 170 mm or less. In detail, when the aluminum reflective plates 140 having reflectance of 90% are spaced apart from each other by a distance of 170 mm or less, an image in which a difference between the gray levels inside and outside the inner diameter 22 is 10 or more may be acquired and inspected. When the chromium reflective plates 140 having reflectance of 60% are spaced apart from each other by a distance of 130 mm or less, an image in which a difference between the gray levels inside and outside the inner diameter 22 is 10 or more may be acquired and inspected.

Further, according to the embodiment, the reflective plate 140 may be spaced a predetermined distance from the substrate 10 so as not to interfere with the movement of the substrate 10. For example, the reflective plate 140 may be spaced 0.5 mm or more from the substrate 10.

For example, the reflective plate 140 may be spaced apart from the substrate 10 by a distance of 0.5 mm to 170 mm. When the gap between the reflective plate 140 and the substrate 10 is 170 mm or more, the reflected light spreads, and a resolution decreases, and as the gap between the reflective plate 140 and the substrate 10 becomes smaller, a clear image, particularly, an image in which a cavity inside the via hole 20 is clear, may be obtained. Further, when the gap between the reflective plate 140 and the substrate 10 is less than 0.5 mm, the substrate 10 may come into contact with the reflective plate 140 in a transfer process, and thus the reflective plate 140 and the substrate 10 may be damaged.

According to the embodiment, to acquire the image of the substrate 10 in which a difference between the gray levels inside and outside the boundary area of the inner diameter 22 is 10 or more, as the reflectance of the reflective plate becomes smaller, the gap between the reflective plate 140 and the substrate 10 should become smaller, and a separation distance by which the substrate 10 and the reflective plate 140 are not damaged due to interference needs to be provided. Based on this, it is preferable that, in the hole inspecting system 100, the reflective plate 140 having reflectance of 60% or more is spaced apart from the substrate 10 by a gap of 0.5 mm to 170 mm.

According to the above-described configurations of the light source 130 and the reflective plate 140, an optical image may be formed based on light obtained by allowing emission light of the light source 130 to pass through the inner diameter of the hole and to be reflected by the reflective plate 140, light reflected from the outer area of the outer diameter of the hole, and light reflected or scattered in the area (e.g., the tapered area) between the outer diameter and the inner diameter of the hole. In this case, an optical phenomenon in which light emitted from the light source 130, reflected in different paths, and incident on the camera is interfered with or is diffracted through the via hole 20 may be involved in optical image generation.

According to the embodiment, the hole inspecting system 100 may simultaneously inspect the outer diameter 21 and the inner diameter 22 by acquiring the image of the substrate 10 in which a difference between the gray levels inside and outside a boundary line between the outer diameter 21 and the inner diameter 22, particularly, a difference between the gray levels inside and outside a boundary line of the inner diameter 22, is 10 or more. Accordingly, the hole inspecting system 100 can shorten an inspection time and improve accuracy of the inspection.

Meanwhile, the inspection module 150 is configured to inspect the via hole 20 based on the image acquired by the camera 120 and may include a processor for image analysis. According to the embodiment, the inspection module 150 may determine whether the via hole 20 is good by extracting the boundary line between the inner diameter 22 and the outer diameter 21 and inspecting whether the inner diameter 22 and the outer diameter 21 of the via hole 20 are formed as well as shapes of the inner diameter 22 and the outer diameter 21. According to the embodiment, the inspection module 150 may process the image of the substrate 10 to further clarify the boundary line between the inner diameter 22 and the outer diameter 21 and thus increase a difference between the gray levels inside and outside the boundary area between the inner diameter 22 and the outer diameter 21.

Further, the inspection module 150 may determine whether the via hole 20 is good by measuring a distance between the via holes 20. For example, whether the via hole 20 is good can be determined by determining a center of the via hole 20 based on at least one of the inner diameter 22 and the outer diameter 21, measuring the distance 23 between the via holes 20 based on the center of the via holes 20, and analyzing an alignment state of the via holes 20.

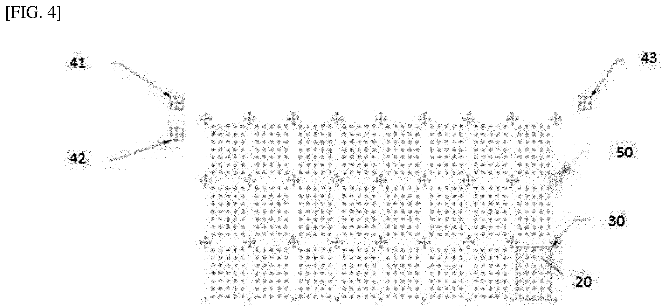

In this regard, FIG. 4 is an exemplary view of the substrate 10 having the plurality of via holes 20 according to the embodiment of the present invention. According to FIG. 4, the substrate 10 may form global marks 41, 42, and 43 corresponding to points of the substrate 10, e.g., corners of the substrate 10, and an alignment mark 50 corresponding to each corner of one group 30 formed by the plurality of via holes 20 or may be combined with separate coordinate configurations forming the global marks 41, 42, and 43 and the alignment mark 50. For example, when the one group 30 formed by the plurality of via holes 20 has a quadrangular shape, the alignment mark 50 may be formed at positions corresponding to four corners of the one group 30.

Accordingly, the inspection module 150 can measure a relative position of the alignment mark 50 based on the global marks 41, 42, and 43 and can measure a position of each via hole 20 included in the one group 30 based on the alignment mark 50.

According to the embodiment, the global marks 41, 42, and 43 and the alignment mark 50 may be formed as a plurality of points or circles that are radially arranged. For example, the global marks 41, 42, and 43 and the alignment mark 50 may be formed as a point or circle disposed at a center and a plurality of points or circles arranged at regular intervals in all directions centered on the point or circle disposed at the center.

In this regard, the inspection module 150 may include an image processing unit (not illustrated) that processes the image of the substrate 10 based on the global marks 41, 42, and 43 and the alignment mark 50.

According to the embodiment, the image processing unit may determine whether the image of the substrate 10 is distorted based on the global marks 41, 42, and 43 and the alignment mark 50. That is, positions and intervals of the global marks 41, 42, and 43 and the alignment mark 50 and contortion of the points or circles included in the global marks 41, 42, and 43 and the alignment mark 50 are measured, or sizes of the points or circles included in the global marks 41, 42, and 43 and the alignment mark 50 are compared with each other. Thus, based on this, distortion, such as inclination or contortion, of the image can be discriminated and corrected.

In this case, the image processing unit may perform affine transformation that changes the entire image by changing arrangement of pixels included in the image. For example, the distortion, such as inclination or contortion, of the image can be discriminated based on the global marks 41, 42, and 43 and the alignment mark 50, the image can be moved in parallel or be rotated by changing a position of each pixel included in the image to measure a degree of the distortion and correct the distortion, and the distortion can be corrected by converting a size of the image or adjusting a ratio of the image.

Further, when the camera 120 acquires a plurality of images of the one substrate 10 divided into predetermined areas, the image processing unit can acquire an image for the entire substrate 10 by merging the plurality of divided images based on the global marks 41, 42, and 43 and the alignment mark 50. For example, the image processing unit can merge the plurality of images by determining a relative position between the plurality of images based on the global marks 41, 42, and 43 and the alignment mark 50.

Further, the image processing unit may perform affine transformation on each of the plurality of divided images based on the global marks 41, 42, and 43 and the alignment mark 50 and may merge the plurality of images. In this case, the image processing unit may perform affine transformation on each of the plurality of divided images, merge the images, and match the images to a computer-aided design (CAD). In this case, the CAD is a generic term for a CAD file itself, a CAD image obtained by converting the CAD file, and data extracted from the CAD file or the CAD image. The data extracted from the CAD file or the CAD image may include, for example, information capable of identifying a relative position between the plurality of divided images and may include coordinate information of the global marks 41, 42, and 43, and the alignment mark 50 included in the CAD file or the CAD image according to the embodiment. Accordingly, the image processing unit may perform affine transformation so that the global marks 41, 42, and 43 and the alignment mark 50 included in the plurality of images are matched with the global marks 41, 42, and 43 and the alignment mark 50 included in the CAD, merge them, and thus acquire the image for the entire substrate 10.

Accordingly, the inspection module 150 may determine whether the via hole 20 is good based on the image of the substrate 10. For example, the inspection module 150 may determine whether the position of the via hole 20 is suitable based on the image of the entire substrate 10. In detail, the inspection module 150 may inspect a position of the one group 30 formed by the plurality of via holes 20 based on the image of the entire substrate 10. In this case, the inspection of the position of the one group 30 formed by the plurality of via holes 20 may include inspection of an alignment state of the one group 30 formed by the plurality of via holes 20, such as a position in which the one group 30 formed by the plurality of via holes 20 is formed in the substrate 10, a distance between the one groups 30, and a relative direction of the one group 30 with respect to the global marks 41, 42, and 43.

In detail, the inspection module 150 may inspect the position of each via hole 20 included in the one group 30 formed by the plurality of via holes 20, but the inspection module 150 may allocate coordinates to each via hole 20 based on the alignment mark 50 corresponding to each corner of the one group 30 and inspect the position of each via hole 20 based on the allocated coordinates. Further, the inspection module 150 can examine the alignment state of the one group 30 formed by the plurality of via holes 20 by extracting a direction component for the one group 30 formed by the plurality of via holes 20 based on the alignment mark 50 and extracting a relative direction for the global marks 41, 42, and 43 formed by the extracted direction component.

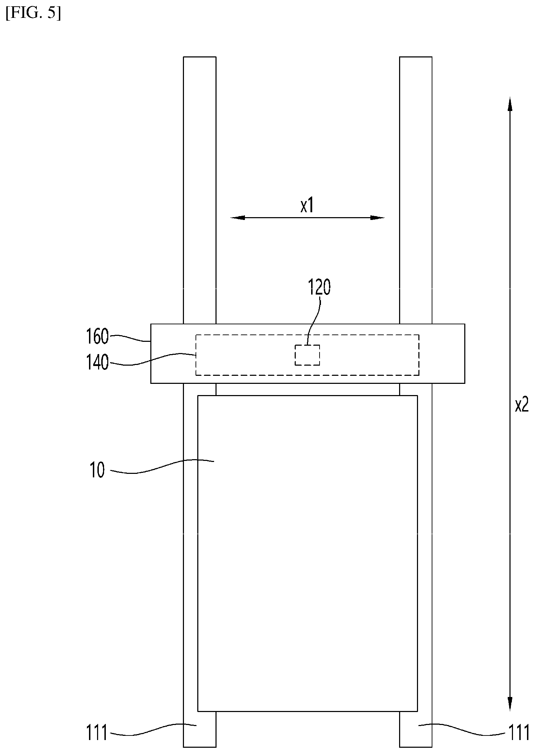

Next, FIG. 5 is a top view for describing the hole inspecting system 100 according to the embodiment of the present invention.

Referring to FIG. 5, the substrate 10 may be moved by the substrate moving module 111, and the camera 120 may be moved by the camera moving module 160 to acquire the image of the substrate 10. Further, the reflective plate 140 may be disposed at a side opposite to the camera 120 based on the substrate 10, and in this case, the reflective plate 140 may be disposed on a line perpendicular to the camera 120.

In detail, the camera moving module 160 may allow the camera 120 to reciprocate in a first direction x1 parallel to the substrate 10. Further, the substrate moving module 111 may move the substrate 10 in a second direction x2 parallel to the substrate 10 but perpendicular to the first direction x1. To this end, the substrate moving module 111 may include a plurality of linear driving modules (not illustrated) arranged on both sides of the substrate 10 to move the substrate 10. Accordingly, the camera 120 may acquire the plurality of images obtained by dividing the one substrate 10 into predetermined areas, and as a result, may quickly and simply acquire the image of the entire area of the substrate 10. Further, the light source 130 may move together with the camera 120 by the camera moving module 160 to continuously provide a coaxial light source while the camera 120 is moving.

In this case, the reflective plate 140 may be installed to extend to be parallel to the first direction x1 in which the camera 120 reciprocates. Further, the reflective plate 140 may be disposed on a line perpendicular to the camera 120.

According to the embodiment, the reflective plate 140 may have a width corresponding to a width of the substrate 10 and have a length corresponding to a field of view (FOV) of the camera 120. Here, the FOV refers to a viewing angle of the camera 120.

In this case, the width corresponding to the width of the substrate 10 may be a length corresponding to one of a horizontal width and a vertical width of an area in which the substrate 10 is formed or the via hole 20 is formed in the substrate 10, and according to the embodiment, may be a width of the substrate 10 in a direction parallel to the first direction x1 in which the camera 120 reciprocates on the substrate 10 or a width of an area in which the via hole 20 is formed on the substrate 10 in a direction parallel to the first direction x1.

Further, the length corresponding to the FOV of the camera 120 may be a length corresponding to an area on the substrate 10, which may be imaged at one time by the camera 120 according to the FOV of the camera 120, and for example, may be a length of an area on the substrate 10, which may be imaged at one time by the camera 120 according to the FOV of the camera 120, in a direction parallel to the second direction x2.

As described above, the reflective plate 140 has a width corresponding to the width of the substrate 10 and a length corresponding to the FOV of the camera 120, and thus the reflective plate 140 may radiate light onto an area of the substrate 10 corresponding to the image acquired as the camera 120 reciprocates.

### [Modes of the Invention]

In another embodiment, the reflective plate 140 may be formed in an area corresponding to the entire area of the substrate 10. For example, the reflective plate 140 may be formed in the same area as the substrate 10 to provide the reflected light to the entire substrate 10.

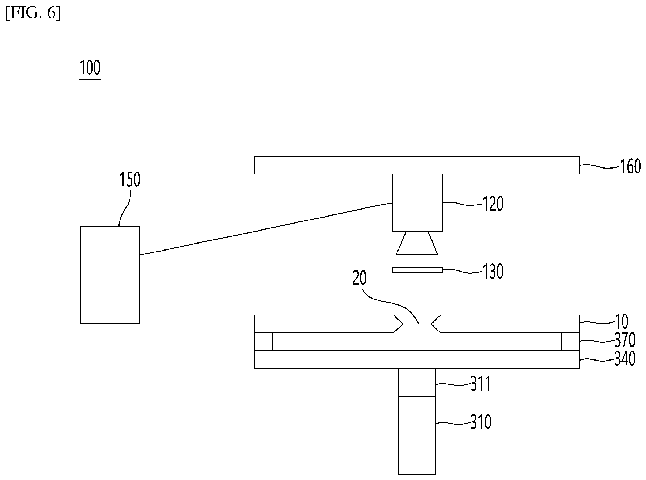

In this regard, FIG. 6 is an exemplary view for describing the hole inspecting system 100 according to another embodiment. In the hole inspecting system 100 illustrated in FIG. 6, a configuration coinciding with the configuration illustrated in FIGS. 3 and 5 or a description thereof is partially omitted.

Referring to FIG. 6, the reflective plate 140 may be formed to be a large area reflective plate 340 corresponding to the entire area of the substrate 10. In this case, the large area reflective plate 340 may be coupled to the substrate 10 by a reflective plate support 370 while spaced a predetermined distance from the substrate 10.

In this case, a substrate support device 310 may support the substrate 10 and the large area reflective plate 340 together. For example, when the large area reflective plate 340 and the substrate 10 are bound to each other and the large area reflective plate 340 is located under the substrate 10, the substrate 10 and the large area reflective plate 340 may be supported together by supporting the large area reflective plate 340.

Further, the substrate moving module 311 may also move the substrate 10 and the large area reflective plate 340 together. That is, when the substrate 10 and the large area reflective plate 340 are bound to each other while spaced a predetermined distance from each other, the substrate moving module 311 may move the substrate 10 and the large area reflective plate 340 together.

In this case, the substrate support device 310 may support the substrate 10 and the large area reflective plate 340 at a lower center of the large area reflective plate 340, the substrate moving module 311 may include a single linear driving module (not illustrated) across the lower center of the large area reflective plate 340, and thus the substrate 10 and the large area reflective plate 340 may be moved together. Therefore, manufacturing costs of the device can be lowered, and maintenance costs can be reduced.

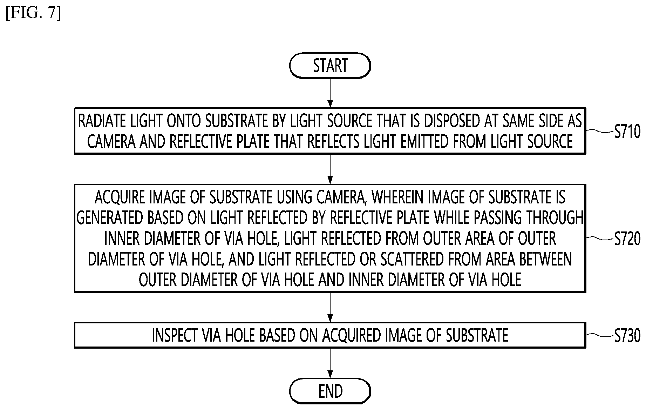

Next, FIG. 7 is a flowchart for describing a hole inspecting method according to the embodiment of the present invention.

Referring to FIG. 7, the hole inspecting method performed by the hole inspecting system 100 may radiate light onto the substrate 10 by the light source 130 disposed at the same side as the camera 120 based on the substrate 10 and the reflective plate 140 that reflects light emitted by the light source 130 (S710).

In this case, the camera 120 may be disposed above or below the substrate 10 to acquire the image of the substrate 10, and the light source 130 may provide a coaxial light source for the camera 120 to the substrate 10. Further, the reflective plate 140 may be disposed at a side opposite to the camera 120 based on the substrate 10 to reflect the light emitted from the light source 130 in a direction of the substrate 10.

According to the embodiment, the reflective plate 140 may have an area corresponding to the entire area of the substrate 10, thereby providing the reflected light to the entire area of the substrate 10. According to another embodiment, the reflective plate 140 may have a width corresponding to the width of the substrate 10 and a length corresponding to the FOV of the camera 120, thereby providing the reflected light to an area corresponding to an area of the image acquired as the camera 120 reciprocates.

Further, the reflective plate 140 may be spaced apart from the substrate 10 by a distance of 0.5 mm to 170 mm. According to the embodiment, when the gap between the reflective plate 140 and the substrate 10 is 170 mm or more, the light reflected by the reflective plate 140 spreads, a resolution of the image of the via hole 20, particularly, an image of a cavity inside the via hole 20, is reduced, and thus the inner diameter 22 of the via hole 20 cannot be detected. Further, when the gap between the reflective plate 140 and the substrate 10 is 0.5 mm or less, there is a possibility of damage due to contact between the reflective plate 140 and the substrate 10. Thus, it is preferable that the reflective plate 140 is spaced apart from the substrate 10 by a distance of 0.5 mm to 170 mm, which may be adjusted according to an intensity of the light source 130 and reflectance according to a material of the reflective plate 140.

For example, it is preferable that the reflective plate 140 have reflectance of 60% or more, and according to the embodiment, the aluminum reflective plate 140 having reflectance of about 90% may be spaced apart from the substrate 10 by a distance of 162.5 mm or less. Further, it is preferable that the chromium reflective plate 140 having reflectance of about 60% be spaced apart from the substrate 10 by a distance of 127.5 mm or less. In this way, the reflectance of the reflective plate 140 and a separation distance between the reflective plate 140 and the substrate 10 may be adjusted, and thus the image of the substrate 10 suitable for inspecting the via hole 20 may be acquired.

According to the embodiment, the hole inspecting system 100 may acquire the image of the substrate 10 using the camera 120 (S720).

In this case, the image of the substrate 10 may be generated based on light passing through the inner diameter 22 of the via hole 20 and reflected by the reflective plate 140, light reflected from the outer area of the outer diameter 21 of the via hole 20, and light reflected or scattered in an area (e.g., the tapered area) between the outer diameter 21 of the via hole 20 and the inner diameter 22 of the via hole 20. In this case, the light emitted from the light source 130, the light reflected through the reflective plate 140, and the light reflected through different paths and incident on the camera 120 may cause an optical phenomenon in which the light is diffracted or is interfered while passing through the via hole 20 and thus may be involved in image generation.

Further, the hole inspecting system 100 may inspect the via hole 20 based on the acquired image of the substrate 10 (S730).

In this case, in the image of the substrate 10, a difference between the gray levels inside and outside the boundary line of the inner diameter 22 of the via hole 20 may be 10 or more. That is, when a difference between the gray levels inside and outside the boundary area between the inner diameter 22 and the outer diameter 21 of the via hole 20 is 10 or more, the inner diameter 22 and the outer diameter 21 may be detected, and to this end, the reflectance of the reflective plate 140 and the gap between the reflective plate 140 and the substrate 10 may be adjusted. Further, according to the embodiment, the image of the substrate 10 may be corrected so that a difference between the gray levels inside and outside the boundary area between the inner diameter 22 and the outer diameter 21 is 10 or more.

According to the embodiment, the hole inspecting system 100 may process the image of the substrate 10 based on the global marks 41, 42, and 43 corresponding to points of the substrate 10 and the alignment mark 50 corresponding to each corner of the one group 30 formed by the via holes 20.

In this case, the global marks 41, 42, and 43 and the alignment mark 50 may be formed on the substrate 10 itself by radially arranging a plurality of points or circles and may be formed in separate coordinate configurations and attached to the substrate 10 according to the embodiment.

According to the embodiment, the hole inspecting system 100 may correct the image of the substrate 10 by determining whether the image of the substrate 10 is distorted based on the global marks 41, 42, and 43 and the alignment mark 50 and inspect whether the via hole 20 is good based on the corrected image of the substrate 10.

For example, the hole inspecting system 100 may inspect at least one of a position of the one group 30 formed by the plurality of via holes 20 and a position of each via hole 20 included in the one group 30 based on the global marks 41, 42, and 43 and the alignment mark 50.

Further, the hole inspecting system 100 may acquire the image for the entire substrate 10 by merging the plurality of images acquired through the camera 120 and divided into predetermined areas based on the global marks 41, 42, and 43 and the alignment mark 50.

For example, the hole inspecting system 100 may perform affine transformation on the plurality of divided images based on the global marks 41, 42, and 43 and the alignment mark 50, may merge the images so that the images are matched with the CAD, and thus may acquire the image of the entire substrate 10.

The hole inspecting system 100 of the present invention may allow the line camera to reciprocate in the first direction x1, move the substrate 10 in the second direction x2, and acquire the image of the entire substrate 10. Thus, an inspection time can be shortened, and the inspection can easily be performed even when the substrate 10 having any size is used.

### (Experimental Example)

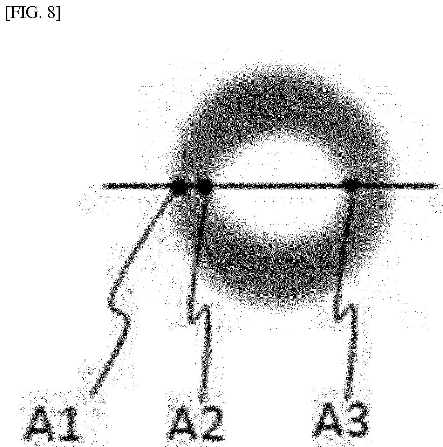

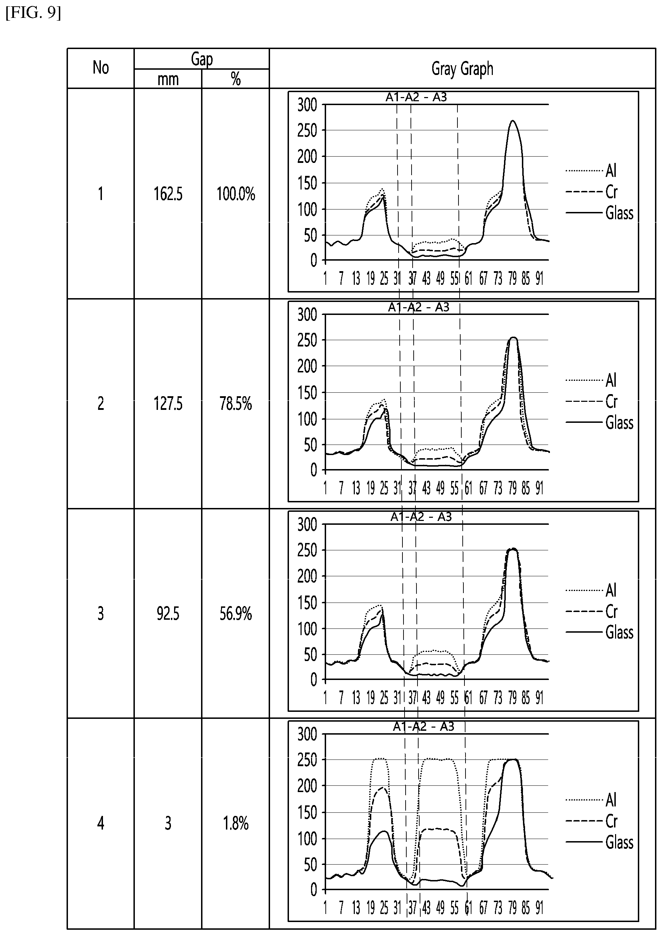

According to the embodiment of the present invention, it has been described above that the hole inspecting system 100 should acquire the image in which a difference between the gray levels inside and outside the outer diameter 21 of the via hole 20 is 10 or more and a difference between the gray levels inside and outside the inner diameter 22 of the via hole 20 is 10 or more on the image of the substrate 10 to identify and inspect the outer diameter 21 and the inner diameter 22 of the via hole 20 formed in the substrate 10. To this end, the hole inspecting system 100 according to the embodiment may adjust the type of the reflective plate 140 and the gap between the reflective plate 140 and the substrate 10, which affect the reflectance, and an experimental example related thereto will be described with reference to FIGS. 8 and 9.

First, FIG. 8 is an image of one via hole 20 in the image of the substrate 10 according to the embodiment of the present invention. FIG. 8 illustrates one point A1 at which a predetermined straight line passing through a central portion of the via hole 20 and the outer diameter 21 meet each other and points A2 and A3 at which the predetermined straight line and the inner diameter 22 meet each other.

Further, FIG. 9 is graphs illustrating a degree of change in a gray level of a hole on the image of the substrate of FIG. 8 according to a separation distance and a type of the reflective plate. In detail, FIG. 9 is a graph depicting the degree of change in the gray level of the via hole 20 on the image of the substrate 10 according to the separation distance between the substrate 10 and the reflective plate 140 and is a graph depicting the gray level that changes along the predetermined straight line passing through the central portion of the via hole 20 with respect to the reflective plate 140 as provided in the embodiment illustrated in FIG. 8. FIG. 9 illustrates an experimental value obtained by acquiring the image of the substrate 10 according to the separation distance of the reflective plate 140 for each of the aluminum (Al) reflective plate, the chromium (Cr) reflective plate, and the glass reflective plate and measuring the gray level that changes along the predetermined straight line passing through the central portion of the via hole 20 in the image.

According to each graph included in FIG. 9, it can be identified in common that the graph sharply falls at the point A1 corresponding to the inside and outside of the boundary area of the outer diameter 21, the graph sharply rises at the point A2 corresponding to the inside and outside of the boundary area of the inner diameter 22, and a constant gray level is formed from the points A2 and A3 corresponding to the cavity area inside the boundary line of the inner diameter 22.

In detail, it was identified that when a first experimental value of FIG. 9 was examined, a distance between the substrate 10 and the reflective plate 140 was 162.5 mm, and in this case, a difference between the gray levels near the point A1 and the point A2 of the aluminum reflective plate was 10 or more. On the other hand, in the case of the chromium reflective plate and the glass reflective plate, a difference between the gray levels was less than 10. That is, when the aluminum reflective plate having reflectance of about 90% and the substrate 10 had a gap of about 162.5 mm, the inner diameter 22 may be identified based on the acquired image.

Further, it was identified that when a second experimental value of FIG. 9 was examined, the distance between the substrate 10 and the reflective plate 140 was 127.5 mm, and in this case, a difference between the gray levels near the point A1 and the point A2 of the aluminum reflective plate and the chromium reflective plate was 10 or more. On the other hand, in the case of the glass reflective plate, a difference between the gray levels was less than 10. That is, when the chromium reflective plate having reflectance of about 60% had a gap of about 127.5 mm, the inner diameter 22 may be identified based on the acquired image.

Next, it was identified that when a third experimental value of FIG. 9 was examined, the distance between the substrate 10 and the reflective plate 140 was 92.5 mm, and when compared with the first experimental value and the second experimental value, a difference between the gray levels near the point A1 and the point A2 in both the aluminum reflective plate and the chromium reflective plate was increased. That is, as the distance between the substrate 10 and the reflective plate 140 became smaller, the difference between the gray levels was increased, and a clearer image of the substrate 10 may be acquired.

Further, it was identified that when a fourth experimental value of FIG. 9 was examined, the distance between the substrate 10 and the reflective plate 140 was 3 mm, and the gray level corresponding to each of the aluminum reflective plate, the chromium reflective plate, and the glass reflective plate was increased significantly. In this case, the inner diameter 22 may be identified because a difference between the gray levels near the point A1 and the point A2 of the glass reflective plate having reflectance of about 7% was 10 or more, but when the distance between the substrate 10 and the reflective plate 140 was 0.5 mm or less, the substrate 10 and the reflective plate 140 may be damaged, which was not preferable.

In summarizing these experimental examples, it is preferable that the hole inspecting system 100 includes the reflective plate 140 having reflectance of 60% or more, and in this case, it is preferable that the distance between the substrate 10 and the reflective plate 140 is in a range of 0.5 mm to 170 mm.

Therefore, the hole inspecting system 100 can, through the line scan camera, acquire the image of the substrate 10, in which a difference between the gray levels inside and outside the boundary area of the inner diameter 22 and a difference between the gray levels inside and outside the boundary area of the outer diameter 21 of the via hole 20 is 10 or more. Therefore, the hole inspecting system 100 can inspect whether the inner diameter 22 and the outer diameter 21 of the via hole 20 are formed as well as a form and a size of the inner diameter 22 and the outer diameter 21, can simultaneously inspect the outer diameter 21 and the inner diameter 22, and thus can greatly shorten the inspection speed and improve accuracy of inspection results.

Although the embodiments of the present invention have been described in more detail with reference to the accompanying drawings, the present invention is not limited to these embodiments and may be variously modified and implemented without departing from the technical spirit of the present invention. Thus, the embodiments disclosed in the present invention are not intended to limit the technology spirit of the present invention, but are intended to describe the present invention, and the scope of the technical spirit of the present invention is not limited by these embodiments. Therefore, it should be understood that the embodiments described above are illustrative but not limiting in all aspects. The scope of protection of the present invention should be interpreted by the appended claims, and all technical spirits within an equivalent scope should be interpreted as being included in the scope of the present invention.

## Claims

1. A hole inspecting system for a substrate provided with a via hole, the hole inspecting system comprising:
a substrate support device that supports the substrate;
a camera disposed above or below the substrate to acquire an image of the substrate;
a light source disposed at the same side as the camera based on the substrate;
a reflective plate disposed at a side opposite to the camera; and
an inspection module that inspects the via hole based on the image of the substrate, wherein the image of the substrate is generated based on light reflected by the reflective plate while passing through an inner diameter of the via hole, light reflected from an outer area of an outer diameter of the via hole, and light reflected or scattered from an area between the outer diameter of the via hole and the inner diameter of the via hole.

2. The hole inspecting system of claim 1, wherein the reflective plate has an area corresponding to an entire area of the substrate.

3. The hole inspecting system of claim 1, wherein the reflective plate has a width corresponding to a width of the substrate and a length corresponding to a field of view (FOV) of the camera.

4. The hole inspecting system of claim 1, wherein the reflective plate is spaced apart from the substrate by a distance of 0.5 mm to 170 mm.

5. The hole inspecting system of claim 1, wherein the reflective plate has a reflectance of 60% or more.

6. The hole inspecting system of claim 1, wherein the reflective plate is formed by being plated with aluminum or chromium.

7. The hole inspecting system of claim 1, wherein the light source is a coaxial light source for the camera and emits straight light.

8. The hole inspecting system of claim 1, wherein the camera acquires the image of the substrate including both the inner diameter and the outer diameter of the via hole, and
the inspection module determines whether the via hole is good based on the image of the substrate.

9. The hole inspecting system of claim 8, wherein, in the image of the substrate, a difference between gray levels inside and outside a boundary area of the inner diameter is 10 or more.

10. A hole inspecting method, which is performed by the hole inspecting system of claim 1, the hole inspecting method comprising:
radiating light onto a substrate by a light source that is disposed at the same side as a camera and a reflective plate that reflects light emitted from the light source;
acquiring an image of the substrate using the camera, wherein the image of the substrate is generated based on light reflected by the reflective plate while passing through an inner diameter of a via hole, light reflected from an outer area of an outer diameter of the via hole, and light reflected or scattered from an area between the outer diameter of the via hole and the inner diameter of the via hole; and
inspecting the via hole based on the acquired image of the substrate.
